# EUROPÄISCHE PATENTSCHRIFT

(11) **EP 0 477 835 B1**
(45) Veröffentlichungstag und Bekanntmachung des Hinweises auf die Patenterteilung: **08.06.1994**
(21) Anmeldenummer: 91116193.3
(22) Anmeldetag: 24.09.1991
(51) Int. Cl.: B66C 1/02, B66F 9/18

(54) **Vakuumheber**
Vacuum hoisting device
Dispositif de levage par vide

(30) Priorität: 26.09.1990 DE 9013524 U
(43) Veröffentlichungstag der Anmeldung: 01.04.1992
(73) Patentinhaber: Bartholomy & Co., D-52355 Düren (DE)
(72) Erfinder: Schmidt, Adolf, W-5160 Düren (DE)
(74) Vertreter: Paul, Dieter-Alfred, Dipl.-Ing.

(56) Entgegenhaltungen:
- DE-A- 2 118 293
- DE-A- 2 250 949
- FR-A- 2 098 432

## Beschreibung

Die Erfindung betrifft einen Vakuumheber zum Transport von einer Haftfläche aufweisenden Lasten, mit wenigstens einem an einem Hubwerk aufgehängten Saugkopf, der wenigstens eine an dessen Saugseite vorspringende Ringdichtung hat, wobei der bzw. die von der bzw. den Ringdichtung(en) umschlossene Vakuumraum bzw. Vakuumräume über eine Verbindungsleitung an eine Vakuumquelle mit einem Vakuumerzeuger angeschlossen ist bzw. sind und in der Verbindungsleitung eine Ventilanordnung vorgesehen ist, die zwischen einer Saugstellung, in der die Vakuumquelle Verbindung zu dem Vakuumraum bzw. den Vakuumräumen hat, und einer Belüftungsstellung, in der die Verbindung zur Vakuumquelle unterbrochen und der Vakuumraum bzw. die Vakuumräume belüftet oder mit Preßluft beaufschlagt ist bzw. sind, umschaltbar ist.

Mit solchen Vakuumhebern lassen sich Rollen aus gewickelten Bändern, deren Material beispielsweise Papier, Metall, Kunststoff oder Laminat ist, anheben und befördern. Auch flache zylindrische Hohlkörper, wie beispielsweise Scheiben, lassen sich mit solchen Vakuumhebern Umsetzen. Dabei kann der Vakuumheber am Hubwerk eines Krans heb- und senkbar aufgehängt, sein.

Es kommen jedoch auch andere Hubwerke in Frage, wie z.B. Balanciergeräte, Manipulatoren, Rollwender od. dgl. Im Sinne der hier beschriebenen Erfindung ist also der Begriff Hubwerk ganz allgemein als Mittel zur Bewegung des Vakuumhebers zu verstehen.

Ein gattungsgemäßer Vakuumheber ist beispielsweise in dem DE-GM 84 35 161.6 beschrieben. Er hat als Saugkopf eine ebene Saugplatte, an deren Unterseite konzentrisch mehrere Ringdichtungen im Abstand zueinander angeordnet sind. Diese Ringdichtungen bilden von diesen jeweils umschlossene, voneinander getrennte Vakuumräume, die beim Aufsetzen der Saugplatte auf die hierfür vorgesehene Haftfläche der für den Transport bestimmten Last abgedichtete Ringkammern bilden, soweit eine Abdeckung durch die Last gegeben ist. Dabei müssen die Ringdichtungen nicht kreisförmig sein, sondern können jede andere Form, z.B. ovale oder eckige Form haben, solange sie nur einen geschlossenen Ring bilden. Es ist auch nicht erforderlich, daß sie ineinandergelegt sind.

Die Vakuumräume sind über Öffnungen in der Saugplatte und über eine Verbindungsleitung mit einer Vakuumquelle, die einen Vakuumerzeuger hat, verbunden. In der Verbindungsleitung ist eine Ventilanordnung vorgesehen. Solange am Vakuumheber keine Last hängt, wird die Ventilanordnung von Hand über zwei Schalter derart eingestellt, daß die Verbindung zum Vakuumerzeuger unterbrochen und der Vakuumraum bzw. die Vakuumräume belüftet sind.

Für das Anheben einer Last wird der Vakuumheber auf die Last abgesenkt und die Ventilordnung dann in die Saugstellung gebracht. Hierdurch wird die Verbindung zwischen Vakuumquelle und Vakuumraum bzw. Vakuumräumen hergestellt. Soweit mehrere Räume vorhanden sind, können auch zusätzliche Ventile vorgesehen sein, die so angeordnet sind, daß sie die Verbindung zur Vakuumquelle nur dann öffnen, wenn der zugordnete Vakuumraum durch die Last vollständig abgedeckt wird. Nachdem der Vakuumraum bzw. die Vakuumräume unter Vakuum gesetzt sind, kann die Last angehoben bzw. umgesetzt werden.

Nach dem Transport und dem Absetzen der Last wird die Ventilanordnung von der Saugstellung wieder in die Belüftungsstellung umgeschaltet. Dieser Vorgang ist besonders unfallgefährdet, insbesondere wenn der Vakuumheber von einer in dessen Bewegungsbereich stehenden Person bedient wird. Bei Unachtsamkeit kann es vorkommen, daß die Umstellung der Ventilanordnung zu früh erfolgt und die Last auf die Füße oder Beine der Bedienungsperson fällt. Auch bei einer Fernbedienung konnen solche Fehler vorkommen mit der Folge, daß im Bewegungsbereich des Vakuumhebers befindliche Personen durch den Absturz der Last verletzt werden.

Der Erfindung liegt deshalb die Aufgabe zugrunde, einen Vakuumheber der eingangs genannten Art mit einer einfachen und zuverlässigen Ventilanordnung zu versehen.

Diese Aufgabe wird erfindungsgemäß dadurch gelöst, daß das Hubwerk mit dem Saugkopf über ein Anschlußstück verbunden ist, das zwischen zwei Endstellungen in einer mit dem Saugkopf verbundenen Führung mittels des Hubwerkes heb- und senkbar geführt ist, wobei Anschlußstück und Führung die Ventilanordnung in Form eines Dreiweg-Axialventils bilden, das sich in der oberen Endstellung in der Saugstellung und in der unteren Stellung in der Belüftungsstellung befindet, und daß Anschlußstück und Führung über wenigstens einen Wechselschalter gekuppelt sind, der bzw. die eine Aufwartsbewegung des Anschlußstückes aus der Saugstellung in die Belüftungsstellung über eine erste Absenkung des Anschlußstückes und eine Aufwärtsbewegungsstellung in die Saugstellung erst nach einer zweiten Absenkung des Anschlußstückes in die untere Stellung erlaubt bzw. erlauben.

Erfindungsgemäß ist somit die Aufhängung des Saugkopfes an dem Hubwerk als Dreiweg-Axialventil ausgebildet, das beim Absetzen einer Last durch Absenken des Anschlußstückes in die Belüftungsstellung geht und damit den Vakuumraum bzw. die Vakuumräume belüftet oder sogar gegebenenfalls mit Preßluft beaufschlagt. Beim anschließenden Abheben des Saugkopfes verhindert der erfindungsgemäß zwischen Anschlußstück und Führung vorgesehene Wechselschalter, daß sich das Anschlußstück in die obere Endstellung und damit in die Saugstellung bewegen kann. Erst wenn der Saugkopf nochmals auf eine Last abgesetzt wird und dann angehoben wird, erlaubt der Wechselschalter ein Hochfahren des Anschlußstückes in die obere Endstellung und damit in die Saugstellung. Der Vakuumraum bzw. die Vakuumräume werden dann unter Vakuum gesetzt, so daß die Last mitgenommen wird. Statt eines Wechselschalters können parallel auch mehrer Wechselschalter vorgesehen sein, damit größere Lasten aufgenommen werden können.

Wechselschalter der vorgenannten Art sind in vielfältigen Ausführungsformen bekannt und werden insbesondere bei Innengreifern von Rollenhebern eingesetzt (vgl. EP-PS 0̸ 0̸70̸ 950̸). Mit der hier vorgeschlagenen Verwendung des Wechselschalters in Kombination mit der besonderen Ausbildung der Aufhängung des Saugkopfes wird eine zuverlässige und automatisch arbeitende Umschaltung der Ventilanordnung bewirkt.

Dabei ist von besonderem Vorteil, daß beim Absetzen der Lasten das Umstellen der Ventilanordnung von der Saugstellung in die Belüftungsstellung zwangsläufig erst dann erfolgt, wenn die Last vollständig abgesetzt ist, also nicht mehr die Gefahr des Abstürzens und damit die Verletzung von Personen besteht.

In Ausbildung der Erfindung ist vorgesehen, daß die Führung als Führungshülse ausgebildet ist, in der das Anschlußstück axial beweglich zwischen den Endstellungen geführt ist. Dabei sollte die Verbindungsleitung über zwei Anschlüsse mit der Führungshülse verbunden sein und das Anschlußstück eine erste Ausnehmung, die in der oberen Endstellung eine Verbindung zwischen den Anschlüssen der Verbindungsleitung herstellt, und eine zweite Ausnehmung aufweisen, die in der unteren Endstellung einerseits eine Verbindung zur Atmosphäre und andererseits zu dem vakuumraumseitigen Anschluß der Verbindungsleitung hat. Dabei kann die erste Ausnehmung auf der Mantelfläche des Anschlußstückes beispielsweise als Ringnut ausgebildet sein, während die zweite Ausnehmung als in dem Anschlußstück verlaufender Belüftungskanal ausgebildet sein kann, dessen radialer Einlaß in der oberen Endstellung Verbindung zum vakuumraumseitigen Anschluß der Verbindungsleitung hat und dessen Auslaß zur Atmosphäre hin offen ist.

Als Wechselschalter haben sich Schwergewichtsschalter bewährt, wie sie aus der EP-PS 0̸ 0̸70̸ 950̸ bekannt sind. Dies gilt insbesondere dann, wenn jeder Schwergewichtsschalter aus zwei einerseits auf der Führung und andererseits auf dem Anschlußstück sitzenden Teilen besteht, nämlich einer dreiecksförmigen Steuerscheibe und einem mit der Steuerscheibe zusammenwirkenden, in Umfangsrichtung bewegbaren Schalthebel, wobei die Steuerscheibe eine im wesentlichen in Umfangsrichtung verlaufende, mit einer Einbuchtung versehene Seite und gegenüber eine zur Aufhängung des Schalthebels gerichtete Spitze aufweist, in deren Bereich eine Sperrklinke zur Führung des Schalthebels beim Absenken des Abschlußstückes entgegen einer auf den Schalthebel wirkenden Kraft angeordnet ist. Ein solcher Schwergewichtsschalter zeichnet sich durch kompakte Ausbildung und sichere Funktion aus.

Der Schalthebel kann beispielsweise an dem Aufhängestück nach unten zu der Steuerkurve auf der Führung gerichtet sein, wobei er zweckmäßigerweise einen radial vorstehenden Führungsbolzen für die Anlage an der Steuerscheibe hat.

Nach einem weiteren Merkmal der Erfindung ist vorgesehen, daß der Schalthebel auf einer radial sich erstreckenden Achse schwenkbar gelagert ist. In diesem Fall kann die auf den Schalthebel wirkende Kraft die Schwerkraft sein, beispielsweise durch Anformung eines asymmetrisch angeordneten Gewichtes. Es besteht auch die Möglichkeit, auf den Schalthebel eine Federkraft wirken zu lassen.

Alternativ zu der schwenkbaren Anordnung eines Schalthebels kann dieser auch starr mit einem in Umfangsrichtung gegen die Wirkung einer Federkraft drehbaren Führungsring befestigt sein.

In weiterer Ausbildung der Erfindung ist vorgesehen, daß gegenüber der Einbuchtung der Steuerscheibe eine Führungsnocke zur Führung des Schalthebels in die Einbuchtung vorgesehen ist. Eine weitere Verbesserung der Führung läßt sich dadurch erzielen, daß die Steuerscheibe von einer Nut umgeben ist, in die der Schalthebel einfaßt.

Die Sperrklinke ist zweckmäßigerweise so ausgebildet, daß sie beim Auseinanderziehen von Anschlußstück und Führung durch den Schalthebel wegschwenkbar ist. Sie kann aber auch als an einer Kante hochstehende Flachfeder ausgebildet sein.

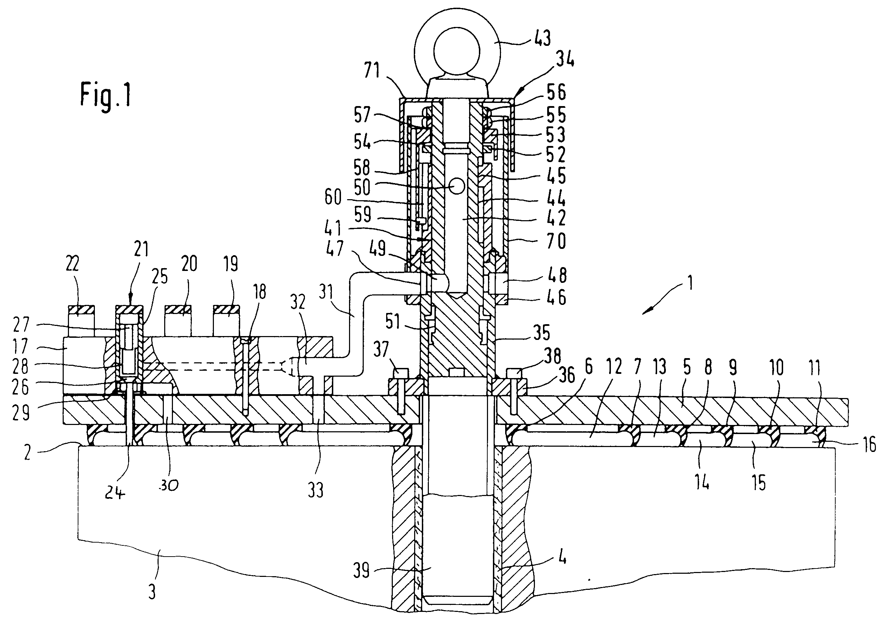

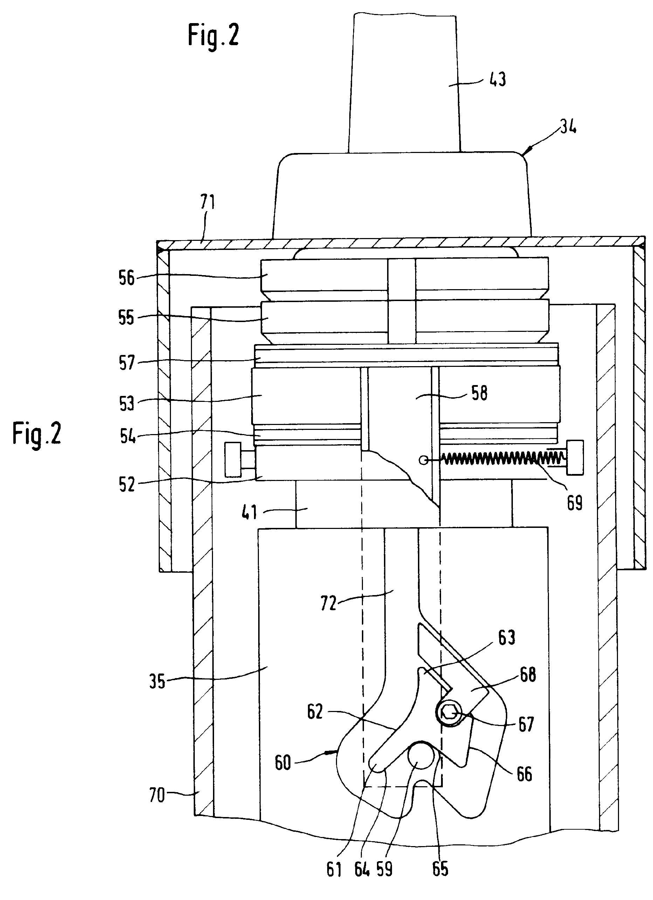

In der Zeichnung ist die Erfindung an Hand eines Ausführungsbeispiels näher veranschaulicht. Es zeigen:
- Figur (1): einen Vertikalschnitt durch einen Vakuumheber mit Last und
- Figur (2): einen teilweisen Vertikalschnitt durch den oberen Teil der Aufhängung des Vakuumhebers.

Der in den Figuren dargestellte Vakuumheber (1) sitzt auf der Oberseite (2) einer senkrecht stehenden Papierrolle (3) auf, welche innenseitig eine Wickelhülse (4) aufweist. Auf dieser Wickelhülse (4) ist die Papierbahn aufgewickelt.

Der Vakuumheber (1) hat eine ebene, kreisrunde Saugplatte (5), an deren Unterseite konzentrisch zur mittleren Vertikalachse des Vakuumhebers (1) sechs kreisrunde Ringdichtungen (6, 7, 8, 9, 10̸, 11) aus einem elastomeren Material angebracht sind. Mit diesen Ringdichtungen (6 bis 11) sitzt der Vakuumheber (1) auf der Oberseite (2) der Papierrolle (3) auf. Die innenliegende Ringdichtung (6) hat einen solch großen Durchmesser, daß sie außerhalb der Wickelhülse (4) liegt, so daß über die Wickelhülse (4) keine Falschluft angesaugt werden kann. Die weiter außen liegenden Ringdichtungen (7, 8, 9, 10̸, 11) schließen jeweils Vakuumräume (12, 13, 14, 15, 16) ein, die jeweils voneinander getrennt sind.

Auf dem linken Teil der Saugplatte (5) ist ein Ventilblock (17) aufgesetzt und mittels Schrauben (18) aufgeschraubt. In dem Ventilblock (17) sind vier Tastventile (19, 20̸, 21, 22) angeordnet, von dem das Tastventil (21) im Vertikalschnitt gezeigt ist. Das Tastventil (21) weist eine unten über die Saugplatte (5) vorstehenden Taststift (24) auf, der obenseitig in ein Ventilgehäuse (25) hineinragt und dort in einen Ventilkegel (26) ausläuft. Innerhalb des Ventilgehäuses (25) ist ein Führungsstift (27) angeordnet, an dessen Außenseite nach oben ragende Vorsprünge (28) des Ventilkegels (26) anliegen und geführt werden.

Der Ventilkegel (26) ist von seinem Ventilsitz (29) abgehoben und gibt somit einen Saugkanal (30̸) frei, der zu dem Vakuumraum (15) führt. Das Tastventil (21) ist also diesem Vakuumraum (15) zugeordnet. Entsprechend sind das Tastventil (22) dem Vakuumraum (16), das Tastventil (20̸) dem Vakuumraum (14) und das Tastventil (19) dem Vakuumraum (13) zugeordnet. Die Taststifte (24) der Tastventile (19, 20̸, 21, 22) stehen dabei unmittelbar neben derjenigen Ringdichtung (8, 9, 10̸, 11) außenseitig vor, die den zugehörigen Vakuumraum (13, 14, 15, 16) außenseitig umschließt.

Dabei werden die Taststifte (24) jeweils durch in den Tastventilen (19, 20̸, 21, 22) angeordnete Federn nach unten gedrückt und ragen in nicht aufgesetztem Zustand des Vakuumhebers (1) über die äußere Ebene der Ringdichtung (6, 7, 8, 9, 10̸, 11) vor. Beim Aufsetzen auf eine Last werden die Taststifte (24) - wie dargestellt - hochgedrückt und damit diejenigen Tastventile (19, 20̸, 21, 22) geöffnet, deren zugehöriger Vakuumraum (13, 14, 15, 16) vollständig durch die Last geschlossen sind. Im vorliegenden Fall ist der Durchmesser der Papierrolle (3) so groß, daß alle Vakuumräume (12, 13, 14, 15, 16) durch die Oberseite (2) abgedeckt und damit alle Taststifte (24) hochgedrückt werden.

Die Tastventile (19, 20̸, 21, 22) sind an eine Verbindungsleitung (31) über in dem Ventilblock (17) verlaufende Verbindungskanäle (32) angeschlossen. Der innenliegende Vakuumraum (12) ist ohne Ventil direkt über einen Saugkanal (33) mit dem Verbindungskanal (32) verbunden.

Von der Saugplatte (5) steht in der axialen Mitte eine Aufhängung (34) hoch. Die Aufhängung (34) weist eine Führungshülse (35) auf, deren unteres Ende von einem angeschweißten Befestigungsflansch (36) umgeben ist, der über Schrauben (37, 38) auf der Oberseite der Saugplatte (5) befestigt ist. An das untere Ende der Führungshülse (35) ist ein Zentrierdorn (39) angeschweißt, der durch eine zentrale Bohrung (40̸) nach unten in die Wickelhülse (4) ragt. Auf diese Weise wird der Vakuumheber (1) beim Absenken auf die Papierrolle (3) zentriert, d. h. der Vakuumheber (1) setzt sich mittig auf der Oberseite (2) der Papierrolle (3) ab.

In der Führungshülse (35) ist ein im wesentlichen zylindrischer Aufhängungskörper (41) vertikal beweglich geführt. Er weist eine sich axial erstreckende Sackbohrung (42) auf, in deren oberes Ende eine Ringschraube (43) eingeschraubt ist. Damit kann der Vakuumheber (1) an einen Kranhaken aufgehängt werden.

In den Außenmantel des Aufhängungskörpers (41), und zwar im oberen Bereich, ist eine vertikal verlaufende Führungsnut (44) eingeformt, in die ein von der Innenseite der Führungshülse (35) vorstehender Vorsprung (45) einfaßt. Der Vorsprung (45) dient sowohl als Anschlag zur Begrenzung der vertikalen Beweglichkeit des Aufhängungskörpers (41) als auch als Verdrehsicherung. In der Darstellung gemäß Figur (1) sind Führungsnut (44) und Vorsprung (45) um 90̸° verdreht gezeichnet. Sie liegen beide tatsächlich an der Rückseite.

Im mittleren Bereich der Führungshülse (35) ist außenseitig ein Anschlußring (46) angeschweißt, durch den sich gegenüberstehende Radialbohrungen (47, 48) gehen. In die linke Radialbohrung (47) mündet der Verbindungskanal (32), während die rechte Radialbohrung (48) über eine hier nicht näher dargestellte Leitung mit einem ebenfalls nicht dargestellten Vakuumerzeuger verbunden ist. Der Aufhängungskörper (41) hat ebenfalls eine Radialbohrung (49), die von dem unteren Ende der Sackbohrung (42) nach links herausgeht und in der gezeigten Stellung koaxial zu der linken Radialbohrung (47) liegt. Von der Sackbohrung (42) geht weiter oberhalb eine zusätzliche Radialbohrung (50̸) aus, die in der gezeichneten Position einer Bohrung in der Führungshülse gegenübersteht und damit eine Verbindung zur Atmosphäre schafft. Unterhalb der Sackbohrung (42) ist in den Mantel des Aufhängungskörpers (41) eine Ringnut (51) eingeformt.

Im Bereich des oberen Endes des Aufhängungskörpers (41) ist ein ringförmiger Stützsteg (52) vorgesehen, auf dem ein in Umfangsrichtung drehbarer Schwenkring (53) über ein Lager (54) gelagert ist. Obenseitig ist der Schwenkring (53) durch zwei gegeneinander gekonterte Nutmuttern (55, 56) und über ein weiteres Lager (57) eingespannt.

Wie sich insbesondere aus Figur (2) ersehen läßt, ist an dem Schwenkring (53) ein senkrecht nach unten gerichteter Schalthebel (58) starr befestigt (in Figur (2) nur teilweise dargestellt). An seinem unteren Ende hat der Schalthebel (58) einen radial nach innen vorspringenden Führungsbolzen (59). Dieser faßt in eine Steuernut (60̸) ein, die in die Außenseite der Führungshülse (35) eingeformt ist und eine im wesentlichen konstante Breite hat. In der Mitte läßt die Steuernut (60̸) eine im Grundsatz dreiecksförmige Steuerscheibe (61) hochstehen. Deren in der Ansicht gemäß Figur (2) linke Seite (62) biegt von einer oberen Spitze (63) in einem Bogen schräg nach links unten ab, wo sie dann in eine sich in Umfangsrichtung verlaufende Seite (64) übergeht. Diese Seite (64) hat eine starke Einbuchtung (65) nach oben. Die daran anschließende rechte Seite (66) hat einen Buckel, oberhalb dem in dem Nutgrund eine mittels einer Schraube (67) befestigte Flachfeder (68) eingelassen ist, die nach oben hin vom Nutgrund hochsteigt.

Der Schalthebel (58) ist über eine Zugfeder (69) mit dem Stützsteg (52) verbunden. Die Zugfeder (69) ist bestrebt, den Schalthebel (58) und damit auch den Schwenkring (53) in der Ansicht gemäß Figur (2) nach rechts zu ziehen.

Von dem Anschlußring (46) steht nach oben ein Abdeckrohr (70̸) hoch, das bis zu den Nutmuttern (55, 56) reicht. Es überlappt mit einen Abdecktopf (71), der zwischen dem oberen Ende des Aufhängungskörpers (41) und der Ringschraube (43) festgeklemmt ist und außenseitig über das Abdeckrohr (70̸) reicht.

Die Funktion der Aufhängung (34) gestaltet sich wie folgt.

In der gezeigten Stellung befindet sich der Aufhängungskörper (41) in seiner unteren Endstellung nach dem Absetzen der Papierrolle (3) und vor dem Abheben von dieser. Die Verbindungsleitung (31) hat über die Radialbohrung (49) Verbindung zu der Sackbohrung (42) und über die weitere Radialbohrung (50̸) zur Atmosphäre. Da die Tastventile (19, 20̸, 21, 22) offen sind, stehen alle Vakuumräume (12, 13, 14, 15, 16) mit der Atmosphäre in Verbindung und sind belüftet. Der Vakuumheber (1) kann jetzt abgehoben werden, wobei der Aufhängungskörper (41) die Führungshülse (35) und damit die Saugplatte (5) über die Abstützung des Führungsbolzens (59) in der Einbuchtung (65) der Steuerscheibe (61) mitnimmt. Während des anschließenden Transportes des Vakuumhebers (1) bleiben die Vakuumräume (12, 13, 14, 15, 16) somit belüftet. Die zum Vakuumerzeuger gehende Radialbohrung (48) ist durch den Aufhängungskörper (41) abgedichtet verschlossen.

Wird der Vakuumheber (1) anschließend auf einer anderen Papierrolle abgesenkt, fährt zunächst der Zentrierdorn (39) in die Wickelhülse ein. Anschließend setzt die Saugplatte (5) mit den Ringdichtungen (6, 7, 8, 9, 10̸, 11) - soweit der Durchmesser der Papierrolle reicht - auf. Dabei kommen die Taststifte (24) der Tastventile (19, 20̸, 21, 22) mit der Oberseite dieser Papierrolle in Berührung und werden - soweit der Durchmesser der Papierrolle reicht - hochgedrückt. Damit sind die Tastventile (19, 20̸, 21, 22), deren Taststifte (24) Kontakt zur Oberseite der Papierrolle bekommen, geöffnet. Ein weiteres Absenken des Hubwerkes, an dem der Vakuumheber (1) hängt, bewirkt, daß der Aufhängungskörper (41) noch ein Stück in der Führungshülse (35) abwärts fährt. Dies hat zur Folge, daß der Schalthebel (58) in der Steuernut (60̸) ebenfalls nach unten bewegt wird, wobei er in der Darstellung gemäß Figur (2) in den rechten unteren Teil der Steuernut (60̸) einfährt, weil der Schalthebel (58) durch die Zugfeder (69) in diese Richtung verdreht wird. Er kommt dann in dem unteren, rechten Teil der Steuernut (60̸) zur Ruhe.

Soll die Papierrolle angehoben werden, wird das Hubwerk entsprechend gesteuert. Hierdurch wird zunächst nur der Aufhängungskörper (41) in der Führungshülse (35) hochgezogen. Dabei fährt der Führungsbolzen (59) den rechten Teil der Steuernut (60̸) entlang der Seite (66) der Steuerscheibe (61) hoch, überfährt die Flachfeder (68) unter Niederdrücken der oberen, hochgebogenen Kante und gelangt so in den gerade hochgehenden Abschnitt (72) der Steuernut (60̸). Die Ausfahrbewegung des Aufhängungskörpers (41) wird durch den Vorsprung (45) begrenzt. Bei Anlage an diesem Vorsprung (45) befindet sich die Ringnut (51) in Höhe der beiden Radialbohrungen (47, 48), während die von der Sackbohrung (42) ausgehende Radialbohrung (49) nach oben außerhalb der Radialbohrung (47) zu liegen kommt. Auf diese Weise ist über die Ringnut (51) eine Verbindung zwischen den beiden Radialbohrungen (47, 48) hergestellt, während der Zugang zur Sackbohrung (42) und damit zur Atmosphäre unterbrochen ist. Die Verbindungsleitung (31) hat dann direkten Anschluß zu dem Vakuumerzeuger, so daß der innenliegende Vakuumraum (12) und alle weiteren Vakuumräume (13, 14, 15, 16), deren Tastventile (19, 20̸, 21, 22) geöffnet sind, unter Vakuum gesetzt werden. Durch weiteres Hochfahren des Hubwerkes wird dann der Vakuumheber (1) zusammen mit der Papierrolle angehoben.

Beim Absetzen der Papierrolle vollziehen sich die einzelnen Bewegungen der Teile des Vakuumhebers (1) in der schon beschriebenen Reihefolge, d. h. der Aufhängungskörper (41) fährt in der Führungshülse (35) auf Grund seines Eigengewichtes wieder abwärts. Dabei rutscht der Schalthebel (58) in der Steuernut (60̸) nach unten, wobei sein Führungsbolzen (59) durch die Flachfeder (68) daran gehindert wird, in den rechten Teil der Steuernut (60̸) einzufahren. Auf Grund der Formgebung der linken Seite (62) der Steuerscheibe (61) wird er gegen die Wirkung der Zugfeder (69) nach links verdreht und kommt dann in den unteren Bereich der Steuernut (60̸). Dabei wird die Verbindung zwischen Vakuumerzeuger und Verbindungsleitung (31) wieder unterbrochen, weil die Ringnut (51) unterhalb der beiden Radialbohrungen (47, 48) zu liegen kommt. Die Verbindungsleitung (31) erhält wieder Verbindung zu der Sackbohrung (42) und damit zur Atmosphäre. Die Vakuumräume (12, 13, 14, 15, 16) werden belüftet.

## Patentansprüche

1. Vakuumheber (1) zum Transport von eine Haftfläche (2) aufweisenden Lasten (3), mit wenigstens einem an einem Hubwerk angehängten Saugkopf (5), der wenigstens eine an dessen Saugseite vorspringende Ringdichtung (7, 8, 9, 10, 11) hat, wobei der bzw. die von der bzw. den Ringdichtung(en) (7, 8, 9, 10, 11) umschlossene Vakuumraum bzw. Vakuumräume (12, 13, 14, 15, 16) über eine Verbindungsleitung (31) an eine Vakuumquelle mit einem Vakuumerzeuger angeschlossen ist bzw. sind und in der Verbindungsleitung (31) eine Ventilanordnung vorgesehen ist, die zwischen einer Saugstellung, in der die Vakuumquelle Verbindung zu dem Vakuumraum bzw. den Vakuumräumen (12, 13, 14, 15, 16) hat, und einer Belüftungsstellung, in der die Verbindung zur Vakuumquelle unterbrochen und der Vakuumraum bzw. die Vakuumraume (12, 13, 14, 15, 16) belüftet oder mit Preßluft beaufschlagt ist bzw. sind, umschaltbar ist, dadurch gekennzeichnet, daß das Hubwerk mit dem Saugkopf (5) über ein Anschlußstück (41) verbunden ist, das zwischen zwei Endstellungen in einer mit dem Saugkopf (5) verbundenen Führung (35) mittels des Hubwerkes heb- und senkbar geführt ist, wobei Anschlußstück (41) und Führung (35) die Ventilanordnung in Form eines Dreiweg-Axialventils bilden, das sich in der oberen Endstellung in der Saugstellung und in der unteren Stellung in der Belüftungsstellung befindet, und daß Anschlußstück (41) und Führung (35) über wenigstens einen Wechselschalter (58, 59, 60, 61, 68, 69) gekuppelt sind, der bzw. die eine Abwartsbewegung des Anschlußstückes (41) aus der Saugstellung in die Belüftungsstellung über eine erste Absenkung des Anschlußstückes (41) und eine Aufwärtsbewegung des Anschlußstückes (41) aus der Belüftungsstellung in die Saugstellung erst nach einer zweiten Absenkung des Anschlußstückes (41) in die untere Endstellung erlaubt bzw. erlauben.

2. Vakuumheber nach Anspruch 1,
dadurch gekennzeichnet, daß die Führung als Führungshülse (35) ausgebildet ist, in der das Anschlußstück (41) axial beweglich zwischen den Endstellungen geführt ist.

3. Vakuumheber nach Anspruch 2,
dadurch gekennzeichnet, daß die Verbindungsleitung (31) über zwei Anschlüsse (47, 48) mit der Führungshülse (35) verbunden ist und daß das Anschlußstück (41) eine erste Ausnehmung (51), die in der oberen Endstellung eine Verbindung zwischen den Anschlüssen (47, 48) der Verbindungsleitung (31) herstellt, und eine zweite Ausnehmung (42, 49, 50̸) aufweist, die in der unteren Endstellung einerseits eine Verbindung zur Atmosphäre und andererseits zu dem vakuumraumseitigen Anschluß der Verbindungsleitung (31) hat.

4. Vakuumheber nach Anspruch 3,
dadurch gekennzeichnet, daß die erste Ausnehmung (51) auf der Mantelfläche des Anschlußstückes (41) eingeformt ist.

5. Vakuumheber nach Anspruch 4,
dadurch gekennzeichnet, daß die erste Ausnehmung als Ringnut (51) ausgebildet ist.

6. Vakuumheber nach einem der Ansprüche 3 bis 5,
dadurch gekennzeichnet, daß die zweite Ausnehmung als in dem Anschlußstück (41) verlaufender Belüftungskanal (42) ausgebildet ist, dessen radialer Einlaß (49) in der unteren Endstellung Verbindung zum vakuumraumseitigen Anschluß (47) der Verbindungsleitung (31) hat und dessen Auslaß (50̸) zur Atmosphäre hin offen ist.

7. Vakuumheber nach einem der Ansprüche 1 bis 6,
dadurch gekennzeichnet, daß der bzw. die Wechselschalter als Schwergewichtsschalter (58, 59, 60̸, 61, 68, 69) ausgebildet ist, bzw. sind.

8. Vakuumheber nach Anspruch 7,
dadurch gekennzeichnet, daß jeder Schwergewichtsschalter aus zwei einerseits auf der Führung (35) und andererseits auf dem Anschlußstück (41) sitzenden Teilen besteht, nämlich einer dreiecksförmigen Steuerscheibe (61) und einem mit der Steuerscheibe (61) zusammenwirkenden, in Umfangsrichtung bewegbaren Schalthebel (58), wobei die Steuerscheibe (61) ein im wesentlichen in Umfangsrichtung verlaufende, mit einer Einbuchtung (65) versehene Seite (64) und gegenüber eine zur Aufhängung des Schalthebels gerichtete Spitze (63) aufweist, in deren Bereich eine Sperrklinke (68) zur Führung des Schalthebels (58) beim Absenken des Anschlußstückes entgegen einer auf den Schalthebel (58 wirkenden Kraft (69) angeordnet ist.

9. Vakuumheber nach Anspruch 8,
dadurch gekennzeichnet, daß jeder Schalthebel (58) von dem Aschlußstück (41) nach unten zu der Steuerscheibe (61) aus der Führung (35) ragt.

10. Vakuumheber nach Anspruch 8 oder 9,
dadurch gekennzeichnet, daß der Schalthebel (58) einen radial vorstehenden Führungsbolzen (59) für die Anlage an der Steuerscheibe (61) aufweist.

11. Vakuumheber nach Anspruch 9 oder 10̸,
dadurch gekennzeichnet, daß der Schalthebel (58) auf einer radial sich erstreckenden Achse schwenkbar gelagert ist.

12. Vakuumheber nach Anspruch 11,
dadurch gekennzeichnet, daß die auf den Schalthebel (58) wirkende Kraft die Schwerkraft ist.

13. Vakuumheber nach einem der Ansprüche 8 bis 11,
dadurch gekennzeichnet, daß die auf den Schalthebel (58) wirkende Kraft eine Federkraft (69) ist.

14. Vakuumheber nach einem der Ansprüche 8 bis 10̸,
dadurch gekennzeichnet, daß der Schalthebel (58) starr an einem in Umfangsrichtung gegen die Wirkung einer Federkraft (69) drehbaren Führungsring (53) befestigt ist.

15. Vakuumheber nach einem der Ansprüche 8 bis 14,
dadurch gekennzeichnet, daß gegenüber der Einbuchtung (65) der Steuerscheibe (61) eine Führungsnocke zur Führung des Schalthebels (58) in die Einbuchtung (65) vorgesehen ist.

16. Vakuumheber nach einem der Ansprüche 8 bis 15,
dadurch gekennzeichnet, daß die Steuerscheibe (61) von einer Nut (60̸) umgeben ist, in die der Schalthebel (58) einfaßt.

17. Vakuumheber nach einem der Ansprüche 8 bis 16,
dadurch gekennzeichnet, daß die Sperrklinke (68) beim Auseinanderziehen von Aschlußstück (41) und Führung (35) durch den Schalthebel (58) wegschwenkbar ist.

18. Vakuumheber nach einem der Ansprüche 8 bis 17,
dadurch gekennzeichnet, daß die Sperrklinke als am oberen Abschnitt an einer Kante hochstehende Flachfeder (68) ausgebildet ist.

## Claims

1. A vacuum lifter (1) for the transport of loads (3) having an adherent surface (2), with at least one suction head (5) suspended on a lifting mechanism, which suction head has at least one ring seal (7, 8, 9, 10, 11) projecting on its suction face, wherein the vacuum space or vacuum spaces (12, 13, 14, 15, 16) enclosed by the ring seal or ring seals (7, 8, 9, 10, 11) is or are connected via a connection line (31) to a vacuum source with a vacuum generator and a valve arrangement is disposed in the connection line (31), which valve arrangement can be changed over between a suction position in which the vacuum source is connected to the vacuum space or the vacuum spaces (12, 13, 14, 15, 16) and an aeration position in which the connection to the vacuum source is interrupted and the vacuum space or the vacuum spaces (12, 13, 14, 15, 16) is or are aerated or acted upon by compressed air, characterised in that the lifting mechanism is attached to the suction head (5) via a connection piece (41) which is guided by means of the lifting mechanism in a guide (35) attached to the suction head (5) so that it can be raised and lowered between two end positions, wherein the connection piece (41) and the guide (35) form the valve arrangement in the form of a three-way axial valve which is situated in the suction position in the upper end position and is situated in the aeration position in the lower end position, and that the connection piece (41) and the guide (35) are coupled via at least one selective switch (58, 59, 60, 61, 68, 69) which does not or do not permit a downward movement of the connection piece (41) from the suction position into the aeration position via a first lowering of the connection piece (41) and an upward movement of the connection piece (41) from the aeration position into the suction position until after a second lowering of the connection piece (41) into the lower end position.

2. A vacuum lifter according to claim 1, characterised in that the guide is constructed as a guide sleeve (35) in which the connection piece (41) is guided so that it can move axially between the end positions.

3. A vacuum lifter according to claim 2, characterised in that the connection line (31) is connected to the guide sleeve (35) via two connections (47, 48), and that the connection piece (41) has a first recess (51) which produces a connection between the connections (47, 48) of the connection line (31) in the upper end position, and has a second recess (42, 49, 50) which in the lower end position is connected firstly to the atmosphere and secondly to the connection on the vacuum space side of the connection line (31).

4. A vacuum lifter according to claim 3, characterised in that the first recess (51) is integrally formed on the curved surface of the connection piece (41).

5. A vacuum lifter according to claim 4, characterised in that the first recess is constructed as an annular channel (51).

6. A vacuum lifter according to any one of claims 3 to 5, characterised in that the second recess is constructed as an aeration channel (42) extending in the connection piece (41), the radial inlet (49) of which aeration channel is connected in the lower end position to the connector (47) on the vacuum side of the connection line (31) and the outlet (50) of which is open to the atmosphere.

7. A vacuum lifter according to any one of claims 1 to 6, characterised in that the selective switch or switches is or are constructed as gravity switches (58, 59, 60, 61, 68, 69).

8. A vacuum lifter according to claim 7, characterised in that each gravity switch consists of two parts seated firstly on the guide (35) and secondly on the connection piece (41), namely of a triangular plate cam (61) and of a switching lever (58) which can move in a peripheral direction and which cooperates with the plate cam (61), wherein the plate cam (61) has a face (64) extending substantially in a peripheral direction and provided with an indentation (65) and has an opposite point (63) oriented for the suspension of the switching lever, in the region of which point a pawl (68) is disposed for guiding the switching lever (58) against a force (69) acting on the switching lever (58) when the connection piece is lowered.

9. A vacuum lifter according to claim 8, characterised in that each switching lever (58) of the connection piece (41) projects downwards from the guide (35) towards the plate cam (61).

10. A vacuum lifter according to claim 8 or 9, characterised in that the switching lever (58) has a radially projecting guide pin (59) for contact with the plate cam (61).

11. A vacuum lifter according to claim 9 or 10, characterised in that the switching lever (58) is pivotally mounted on a radially extending axis.

12. A vacuum lifter according to claim 11, characterised in that the force acting on the switching lever (58) is the force of gravity.

13. A vacuum lifter according to any one of claims 8 to 11, characterised in that the force acting on the switching lever (58) is a spring force (69).

14. A vacuum lifter according to any one of claims 8 to 10, characterised in that the switching lever (58) is rigidly attached to a guide ring (53) which can rotate in a peripheral direction against the action of a spring force (69).

15. A vacuum lifter according to any one of claims 8 to 14, characterised in that a guide cam for guiding the switching lever (58) into the indentation (65) is provided opposite the indentation (65) on the plate cam (61).

16. A vacuum lifter according to any one of claims 8 to 15, characterised in that the plate cam (61) is surrounded by a channel (60) in which the switching lever (58) engages.

17. A vacuum lifter according to any one of claims 8 to 16, characterised in that the pawl (68) can be swung away by the switching lever (58) when the connection piece (41) and guide (35) are extended.

18. A vacuum lifter according to any one of claims 8 to 17, characterised in that the pawl is constructed as a leaf spring (68) with its upper section turned up on one edge.

## Revendications

1. Elévateur (1) à dépression destiné au transport de charges (3) présentant une surface d'adhérence (2), comportant au moins une tête aspirante (5) suspendue à un mécanisme de levage et munie d'au moins une garniture annulaire d'étanchement (7, 8, 9, 10, 11) qui fait saillie au-delà du côté aspiration de ladite tête, la (les) chambre(s) de dépression (12, 13, 14, 15, 16), respectivement ceinturée(s) par la (les) garniture(s) annulaire(s) d'étanchement (7, 8, 9, 10, 11), étant raccordée(s), par l'intermédiaire d'un conduit de liaison (31), à une source de dépression associée à un générateur de dépression, et le conduit de liaison (31) renfermant un dispositif d'obturation pouvant être commuté entre une position d'aspiration, dans laquelle la source de dépression communique avec la (les) chambre(s) de dépression (12, 13, 14, 15, 16), et une position d'aérage dans laquelle la communication avec la source de dépression est rompue, et la (les) chambre(s) de dépression (12, 13, 14, 15, 16) est (sont) aérée(s), ou bien sollicitée(s) par de l'air comprimé, caractérisé par le fait que le mécanisme de levage est relié à la tête aspirante (5) par l'intermédiaire d'une pièce de raccordement (41) guidée entre deux positions extrêmes, dans un guide (35) relié à la tête aspirante (5), de manière à pouvoir être levée et abaissée au moyen du mécanisme de levage, la pièce de raccordement (41) et le guide (35) formant le dispositif d'obturation se présentant comme une vanne axiale à trois voies qui occupe la position d'aspiration dans la position extrême supérieure, et la position d'aérage dans la position inférieure ; et par le fait que la pièce de raccordement (41) et le guide (35) sont accouplés par l'intermédiaire d'au moins un sélecteur (58, 59, 60, 61, 68, 69) qui autorise(nt) un mouvement descendant de la pièce de raccordement (41), de la position d'aspiration à la position d'aérage, par l'intermédiaire d'un premier abaissement de la pièce de raccordement (41), et un mouvement ascendant de la pièce de raccordement (41), de la position d'aérage à la position d'aspiration, uniquement après un second abaissement de la pièce de raccordement (41) jusqu'à la position extrême inférieure.

2. Elévateur à dépression selon la revendication 1,
caractérisé par le fait que le guide est réalisé sous la forme d'une douille de guidage (35), dans laquelle la pièce de raccordement (41) est guidée avec mobilité axiale entre les positions extrêmes.

3. Elévateur à dépression selon la revendication 2,
caractérisé par le fait que le conduit de liaison (31) est relié à la douille de guidage (35) par l'intermédiaire de deux raccords (47, 48) ; et par le fait que la pièce de raccordement (41) comprend un premier évidement (51) qui établit, dans la position extrême supérieure, une communication entre les raccords (47, 48) du conduit de liaison (31), et un second évidement (42, 49, 50) communiquant, dans la position extrême inférieure, d'une part avec l'atmosphère et, d'autre part, avec le raccord du conduit de liaison (31) qui est situé côté chambre(s) de dépression.

4. Elévateur à dépression selon la revendication 3,
caractérisé par le fait que le premier évidement (51) est pratiqué dans la surface de l'enveloppe de la pièce de raccordement (41).

5. Elévateur à dépression selon la revendication 4,
caractérisé par le fait que le premier évidement est réalisé sous la forme d'une gorge annulaire (51).

6. Elévateur à dépression selon l'une des revendications 3 à 5,
caractérisé par le fait que le second évidement est réalisé sous la forme d'un canal d'aérage (42) parcourant la pièce de raccordement (41), canal dont l'admission radiale (49) communique, dans la position extrême inférieure, avec le raccord (47) du conduit de liaison (31) qui est situé côté chambre(s) de dépression, et dont la sortie (50) est ouverte vers l'atmosphère.

7. Elévateur à dépression selon l'une des revendications 1 à 6,
caractérisé par le fait que le (les) sélecteur(s) est (sont) réalisé(s) sous la forme d'un (de) sélecteur(s) à contrepoids (58, 59, 60, 61, 68, 69).

8. Elévateur à depression selon la revendication 7,
caractérisé par le fait que chaque sélecteur à contrepoids se compose de deux parties reposant, d'une part, sur le guide (35) et, d'autre part, sur la pièce de raccordement (41), c'est-à-dire d'une plaquette triangulaire de commande (61) et d'un levier de manoeuvre (58) mobile dans le sens périphérique et coopérant avec la plaquette de commande (61), la plaquette de commande (61) comprenant un côté (64) s'étendant pour l'essentiel dans le sens périphérique et muni d'une indentation (65) et, à l'opposé, une pointe (63) qui est orientée vers le système de suspension du levier de manoeuvre, et dans la region de laquelle est disposé un cliquet de verrouillage (68) conçu pour guider le levier de manoeuvre (58) lors de l'abaissement de la pièce de raccordement, en s'opposant à une force (69) agissant sur le levier de manoeuvre (58).

9. Elévateur à dépression selon la revendication 8,
caractérisé par le fait que chaque levier de manoeuvre (58) dépasse vers le bas au-delà de la pièce de raccordement (41), hors du guide (35), en direction de la plaquette de commande (61).

10. Elévateur à depression selon la revendication 8 ou 9,
caractérisé par le fait que le levier de manoeuvre (58) présente un tenon de guidage (59) saillant radialement, pour venir s'appliquer contre la plaquette de commande (61).

11. Elévateur à dépression selon la revendication 9 ou 10,
caractérisé par le fait que le levier de manoeuvre (58) est monté à pivotement sur un axe s'étendant radialement.

12. Elévateur à dépression selon la revendication 11,
caractérisé par le fait que la force agissant sur le levier de manoeuvre (58) est la force de gravité.

13. Elévateur à dépression selon l'une des revendications 8 à 11,
caractérisé par le fait que la force agissant sur le levier de manoeuvre (58) est la force d'un ressort (69).

14. Elévateur à dépression selon l'une des revendications 8 à 10,
caractérisé par le fait que le levier de manoeuvre (58) est relié rigidement à une bague de guidage (53) pouvant tourner dans le sens périphérique, en s'opposant à l'action de la force d'un ressort (69).

15. Elévateur à dépression selon l'une des revendications 8 à 14,
caractérisé par le fait qu'une came de guidage est prévue, en vis-à-vis de l'indentation (65) de la plaquette de commande (61), en vue de guider le levier de manoeuvre (58) jusque dans l'indentation (65).

16. Elévateur à dépression selon l'une des revendications 8 à 15,
caractérisé par le fait que la plaquette de commande (61) est entourée par une saignée (60) dans laquelle le levier de manoeuvre (58) s'engage.

17. Elévateur à dépression selon l'une des revendications 8 à 16,
caractérisé par le fait que, lors de la dissociation mutuelle de la pièce de raccordement (41) et du guide (35), le cliquet de verrouillage (68) peut être écarté par pivotement imprimé par le levier de manoeuvre (58).

18. Elévateur à dépression selon l'une des revendications 8 à 17,
caractérisé par le fait que le cliquet de verrouillage est réalisé sous la forme d'un ressort aplati (68), rehaussé sur une arête dans la région supérieure.
